# EUROPÄISCHE PATENTANMELDUNG

(11) **EP 4 613 235 A1**
(43) Veröffentlichungstag der Anmeldung: **10.09.2025**
(21) Anmeldenummer: 24161282.9
(22) Anmeldetag: 04.03.2024
(51) Int. Cl.: A61C 8/00

(54) **DENTALBAUTEIL**

(71) Anmelder: UK Verwaltung GmbH, 75449 Wurmberg (DE)
(72) Erfinder: Kratt, Uwe, 75449 Wurmberg (DE); Altwicker, Sascha, 75015 Bretten (DE)
(74) Vertreter: Seyer & Nobbe Patentanwälte PartmbB

(57) **Zusammenfassung**

Die vorliegende Erfindung betrifft ein Dentalbauteil, das mit einem Zahnimplantat verbunden werden kann, wobei das Dentalbauteil einen Gingivaformer und einen Scanbody umfasst. Des Weiteren betrifft die Erfindung ein Verfahren zur Herstellung eines patientenspezifischen Zahnmodells und die Verwendung eines mit dem erfindungsgemäßen Verfahren erhaltenen digitalen Modells zur Herstellung von patientenspezifischem Zahnersatz.

## Beschreibung

Die vorliegende Erfindung betrifft ein Dentalbauteil, das mit einem Zahnimplantat verbunden werden kann, wobei das Dentalbauteil einen Gingivaformer und einen Scanbody umfasst. Des Weiteren betrifft die Erfindung ein Verfahren zur Herstellung eines patientenspezifischen Zahnmodells und die Verwendung eines mit dem erfindungsgemäßen Verfahren erhaltenen digitalen Modells zur Herstellung von patientenspezifischem Zahnersatz.

Die Indikation für den Ersatz von verlorenen oder abgebrochenen Zähnen im Gebiss eines Menschen ist nicht nur aus ästhetischen Gründen gegeben. Um die korrekte Funktion und Ausrichtung der Zähne aufrechtzuerhalten und darüber hinaus Sekundärkomplikationen wie Infektionen und Karies zu vermeiden, ist es ein gängiges zahnärztliches Verfahren, die Lücke mit einem Zahnimplantat zu füllen.

Das Einsetzen des Implantats kann in mehreren Schritten erfolgen. In einem ersten Schritt kann ein Implantologe die klinische Situation prüfen und eine geeignete Strategie für die Gesamtausrichtung des Zahnimplantats festlegen. In einem zweiten Schritt kann die Knochenstruktur durch Bohren vorbereitet werden, um eine Zahnimplantat-Halterung aufzunehmen, die in den Knochen gedrückt oder geschraubt wird. Die Halterung sorgt für die mechanische Verankerung der weiteren Implantatteile, und an der zahnärztlichen Halterung kann zum Beispiel ein Heilungsaufbau befestigt werden.

Solche mehrteiligen Implantate sind vielseitiger, da das Verankerungsteil und der Aufbau an die individuellen Bedürfnisse des Patienten angepasst werden können. Darüber hinaus können für die verschiedenen Implantatteile unterschiedliche Materialien verwendet werden, so dass die Gesamtvorrichtung an die jeweiligen mechanischen Anforderungen angepasst werden kann. In der letzten Phase wird die Einheilung durch eine natürlichere endgültige Prothese oder Restauration, z. B. mit einer Kronenstruktur, ersetzt oder optimiert. Das gesamte Verfahren stellt die ursprüngliche mechanische Architektur des Gebisses wieder her und sorgt für ein besseres ästhetisches Ergebnis.

In den letzten Jahrzehnten haben sich verschiedene Behandlungsmöglichkeiten entwickelt, um die Implantatplanung, die Präzision der Implantatoperation und das endgültige Kronendesign zu optimieren. In der Vergangenheit basierte die Planung und das Kronendesign auf mehreren physischen Gips- oder Kunststoffabdrücken, die vor und nach der Zahnimplantation genommen wurden. Das Hauptziel der Abformung ist die Übertragung der patientenspezifischen Zahnimplantatumgebung für einen Techniker, um die Verarbeitung eines optimalen, an die Bedürfnisse des Patienten angepassten Implantats zu gewährleisten. Später wurde dieser Ansatz in die digitale Welt übertragen.

KR 10 171 4311 B1 bezieht sich beispielsweise auf eine Implantatbaugruppe, die die Bequemlichkeit von Verfahren maximiert und genaue Scaninformationen während eines computergestützten Entwurfs (CAD)/computergestützten Herstellungsvorgangs (CAM) unter Verwendung eines digitalen optischen Scanners für die Mundhöhle liefert. Das Dokument offenbart ferner, dass ein Scanbody und ein Heilungsaufbau voneinander getrennt werden können.

Ein Abutmentsystem und dessen Verwendung ist in der WO 2017/085288 A1 offenbart. Das Abutmentsystem kann ein Basisteil umfassen, das über eine Abutmentschraube mit einem Zahnimplantat verbunden werden kann, sowie eine Einheilkappe, die über eine weitere Schraube mit dem Basisteil verbunden werden kann. Die Einheilkappe kann Merkmale aufweisen, die von einem intraoralen Scansystem gescannt oder auf einen physischen Abdruck übertragen werden können, um Informationen über die Position und Ausrichtung des Basisteils zu übermitteln.

Ein weiteres Verfahren mit oralen Abtasttechniken ist in der WO 2015/030281 A1 offenbart. Das Dokument beschreibt eine Implantatanordnung, die ein einfaches medizinisches Verfahren ermöglicht und die Belastung des Patienten minimiert. Ein Scanbody umfasst: eine polygonale Projektionseinheit, die dem unteren Ende ausgebildet ist; eine Körpereinheit, die an dem oberen Ende ausgebildet ist, mindestens eine ebene Einheit aufweist, die parallel zu einer Oberfläche der polygonalen Projektionseinheit verläuft, und größer als die Projektionseinheit ist; eine schräge Verbindungseinheit zum Verbinden der polygonalen Projektionseinheit und der Körpereinheit; und ein Durchgangsloch, das vertikal in seinem zentralen Abschnitt ausgebildet ist. Der Scanbody wird mit einer Befestigungsschraube an einer am Alveolarknochen befestigten Halterung befestigt. Der Scanbody kann ein Notfallprofil bilden, das einem natürlichen Zahn auch bei der Behandlung von Gingiva ähnlich ist, und das Abtasten ist in einem Zustand möglich, in dem der Scanbody befestigt ist, so dass medizinische Verfahren einfacher sein können und die Belastung, die ein Patient empfinden kann, minimiert werden kann.

EP3718500 beschreibt eine weitere zahnmedizinische Vorrichtung, wobei diese Vorrichtung mit einer Zahnimplantathalterung verbunden werden kann und wobei die Vorrichtung mindestens einen Abtastkörper umfasst, der mit dem Zahnimplantat verbunden werden kann und von einer Abtastvorrichtung erfasst werden kann, und einen thermisch anpassbaren Gingivakörper, der an dem Abtastkörper in einer festen Position angebracht ist, wobei der Gingivakörper ein thermoplastisches Polymer umfasst, sowie ein Verfahren zur Herstellung eines Zahnmodells und die Verwendung eines mit dem erfindungsgemäßen Verfahren erhaltenen digitalen Modells zur Herstellung von Kronenmodellen.

Dennoch besteht über die bestehenden Lösungen im Bereich der dentalen Abutmentsysteme hinaus weiterhin ein Bedarf an scanbaren Dentalbauteilen, bei denen die Bauteile an die patientenspezifischen Bedürfnisse angepasst werden können und bei denen der Aufbau der Vorrichtung einfach in ein digitales Modell übertragen werden kann und gleichzeitig die Belastung des Patienten infolge notwendiger Behandlungsschritte minimiert wird.

Der vorliegenden Erfindung liegt daher die Aufgabe zugrunde, ein solches flexibles und scanbares Dentalbauteil bereitzustellen, wobei dieses Bauteil zum einen den Scanvorgang vereinfacht und zum anderen die Behandlung für den Patienten beschleunigt.

Die Aufgabe der Erfindung wird gelöst durch Bereitstellung eines Dentalbauteils, das zur Verbindung mit einem Zahnimplantat ausgelegt ist, wobei das Dentalbauteil einen Gingivaformer und einen an dem Gingivaformer festgelegten Scanbody umfasst, wobei zumindest an dem Gingivaformer des Dentalbauteils Elemente vorhanden sind, die so ausgelegt sind, um mit korrespondierenden Elementen an dem Zahnimplantat, das in der Knochenstruktur eines Kiefers angeordnet ist, verbunden zu werden.

Das Dentalbauteil ist so ausgestaltet, dass es mit einem Zahnimplantat verbunden werden kann. Das Dentalbauteil weist somit Merkmale oder ist so beschaffen, dass zusätzliche Merkmale an dem Gingivaformer des Dentalbauteils vorhanden sind, um mit einem Zahnimplantat, das in der Knochenstruktur eines Kiefers angeordnet ist, verbunden zu werden. Die Mittel zur Befestigung können beispielsweise einen Bolzen oder eine Schraube umfassen. Darüber hinaus ist es möglich, dass das Dentalbauteil an der dem Zahnimplantat zugewandten Seite, somit dem Gingivaformer, ein Gewinde aufweist, in das eine Schraube oder Gewindestange eingesetzt werden kann. Der Teil des Gewindes, der nicht in dem Gewinde des Gingivaformers angeordnet ist, kann für die Befestigung des Dentalbauteils an dem Implantat verwendet werden. Es ist auch möglich, dass andere mechanische oder chemische Verbindungssysteme verwendet werden, wobei das Implantat die dem Dentalbauteil korrespondierenden Befestigungsmittel aufweist.

Eine Weiterbildung der Erfindung erfolgt durch Bereitstellung eines Dentalbauteils zur Verbindung mit einem Zahnimplantat, wobei das Dentalbauteil einen Gingivaformer und einen an dem Gingivaformer festgelegten Scanbody umfasst, sowie eine axiale Durchgangsbohrung durch den Gingivaformer und den Scanbody aufweist, wobei das Dentalbauteil mittels einer Halteschraube, die einen Gewindeabschnitt und einen zylindrischen Schraubenkopf mit gegenüber dem Gewindeabschnitt vergrößertem Durchmesser aufweist, durch die Durchgangsbohrung mit der Halteschraube korrespondierenden Abschnitten an dem Ende des Zahnimplantates gesichert festlegbar ist. Diese Sicherung wird bevorzugt über eine Verdrehsicherung mit ein Verdrehen blockierenden Elementen, eine Flächenpressung oder ein Außen-Innen-Konus-Paar bereitgestellt.

Mit diesem Dentalbauteil wird erreicht, dass nach Setzen des Implantates und einem ersten Scan unter Verwendung eines Scanbodies, der in das Implantat zum Scan der Einbausituation eingesetzt wird, und nach Entfernen des Scanbodies das Dentalbauteil mit Gingivaformer und an dem Gingivaformer festgelegten Scanbody eingesetzt und am Implantat mittels der Halteschraube dem Implantationsort angepasst ausgerichtet und drehgesichert festgelegt ist. Nach dem Scan des Dentalbauteils in der Einbausituation kann der an dem Gingivaformer festgelegte Scanbody vom Gingivaformer entfernt werden, und der Gingivaformer verbleibt in der Einbausituation mit dem Implantat verbunden, bis ein unter Verwendung der Scandaten gefertigtes patientenspezifisches Abutment oder ein Langzeit-Provisorium anstelle des Gingivaformers auf dem Implantat festgelegt werden kann.

Überraschenderweise wurde festgestellt, dass das oben beschriebene Dentalbauteil im Vergleich zum Stand der Technik in der Zahnprothetik wesentliche Vorteile bietet. Das Dentalbauteil ermöglicht ein umfassendes Konzept, das nicht nur die isolierte Zahnstruktur, sondern auch die funktionelle Zahnumgebung pflegt. Insbesondere das Zahnfleisch oder Gingivagewebe ist wichtig für eine ordnungsgemäße Einheilung und bestimmt auch die funktionelle Leistung des Implantats. Das erfindungsgemäße Dentalbauteil ist leicht in-vivo anpassbar, und die aktuellen und späteren Behandlungsschritte können auf einer exakten Nachbildung des Gingivagewebes direkt nach dem Einsetzen der Implantathalterung basieren. Dies ermöglicht ein natürlicheres Aussehen der Gingiva und gewährleistet zudem die richtigen Proportionen zwischen dem Gingivaformer und dem Scanbody. Ein zusätzlicher Vorteil besteht darin, dass der gesamte Aufbau des Dentalbauteils und des Gingivaformers gescannt werden kann, was eine einfache Übertragung des physischen Dentalbauteils in eine digitale Form ermöglicht. Das Dentalbauteil kann in der Mundhöhle in-vivo gescannt werden, und, da sowohl der anpassbare Gingivaformer als auch der Scanbody scanbar sind, kann der Gesamtaufbau exakt nachvollzogen werden. Darüber hinaus ist es aufgrund der Scanbarkeit auch möglich, die relative Ausrichtung der beiden Teile in der Mundhöhle sowie zueinander zu bestimmen. Gerade letzteres kann helfen, weitere Sicherheitsmaßnahmen einzubeziehen und die Möglichkeit zu gewährleisten, ein detailliertes digitales Modell zu erstellen. Ein Scan des kompletten Dentalbauteils ist somit grundsätzlich möglich, in der Regel aber heutzutage nicht mehr notwendig. Die Formteile wie Gingivaformer werden in Ihrer Art und Bauform bereits in Bibliotheken / Programmen hinterlegt, um genau reproduzierbare Formen bereitzustellen, zu bearbeiten und zu verwenden. Demnach sind Unterschiede zwischen verfügbarem Dentalbauteil und der gefertigten finalen Prothetik durch Werkzeugparameter bzw. Einstellungen an Maschinen anpassbar.

Der Scanbody ist geeignet, von einer Scanvorrichtung erfasst zu werden. Einerseits kann der Scanbody so wie er ist mit einem optischen Scanner, z.B. einem intraoralen Scanner, der auf optischen Aufnahmetechniken wie einem Film oder einem CCD-Chip basiert, gescannt werden. Um die Abtastbarkeit zu erhöhen, kann der Scanbody weitere Substanzen enthalten, die den Kontrast und die Abtastbarkeit im Vergleich zur Umgebung des Scanbody erhöhen. Andererseits kann der Scanbody röntgendurchlässig oder röntgendicht sein, d. h. die äußeren Strukturen des Geräts können zumindest teilweise durch eine Röntgenmessung, z. B. durch Computertomographie (oder CBCT), konventionelle CT oder Mikro-CT, erfasst werden.

Der individualisierbare Gingivaformer ist für den Patienten und die Einbauposition im Kiefer des Patienten individualisierbar und für die Durchführung der Scans fest mit dem Scanbody, aber in einer Ausführungsform zur Entfernung nach den Scans lösbar, verbunden. Dies bedeutet, dass der individualisierbare Gingivaformer während der gesamten Scan-Behandlung mit dem Scanbody verbunden ist. Beide Körper behalten während der Behandlung im Prinzip ihre Ausrichtung bei, obwohl der individualisierbare Gingivaformer an die Gingivalinie modelliert verwendet wird. Die physikalische oder chemische Fixierung kann auch oder zusätzlich z.B. durch Zementieren oder Kleben beider Teile erfolgen. In der Regel ist es erfindungsgemäß vorgesehen, dass die Fixierung durch mechanische Teile wie die Halteschraube erfolgt, die eine unveränderte Position beider Teile während der Behandlung ermöglichen. Diese Anordnung gewährleistet eine definierte Ausrichtung der Teile und ist einer Situation überlegen, in der ein oder beide Teile verschoben werden können. Vorzugsweise beinhaltet die Fixierung, dass beide Körper, der Scanbody und der Gingiva-Körper, ihre relative Position an der Verbindungsstelle um weniger als 1 mm, vorzugsweise um weniger als 0,5 mm, noch bevorzugter um weniger als 0,1 mm während der Behandlung verändern können.

In einer Weiterbildung des Dentalbauteils hat die Durchgangsbohrung im Scanbody einen zur Aufnahme des Schraubenkopfes der Halteschraube angepassten Durchmesser und ist so bemessen, dass die Halteschraube im Scanbody vorzugsweise versenkt und am Gingivaformer mit dem Schraubenkopf anliegend festlegbar ist. Auf diese Weise wird erreicht, dass die Halteschraube durch den Scanbody in den Gingivaformer vorzugsweise so versenkt ist, dass der Schraubenkopf im Gingivaformer vorzugsweise versenkt anliegend den Ginginvaformer in das Implantat eingeschraubt und auf dem Implantat drehgesichert festlegt.

Vorzugsweise sind bei dem Dentalbauteil zur Verbindung mit einem Zahnimplantat Gingivaformer und Scanbody einstückig ausgebildet. So ist mit der Festlegung der Halteschraube im Implantat das Dentalbauteil auf dem Implantat festgelegt.

In einer Weiterbildung des Dentalbauteils zur Verbindung mit einem Zahnimplantat zwischen Gingivaformer und Scanbody ist ein vorzugsweise rotationssymmetrischer Bereich mit einer gegenüber Gingivaformer und Scanbody geringeren radialen Wandstärke ausgebildet ist.

In einer Weiterbildung des Dentalbauteils zur Verbindung mit einem Zahnimplantat kann der vorzugsweise rotationssymmetrische Bereich vorzugsweise zylindrisch, konisch und/oder nach Art eines Kugelsegmentes gebogen und vorzugsweise mit einer Wandstärke von 10 µm bis 100 µm, ausgebildet sein. Bei dieser Ausführungsform ist die Abtrennung des Scanbodies vom Gingivaformer erleichtet, da durch Beaufschlagung mit einer geringen axial wirkenden Kraft der vorzugsweise rotationssymmetrische Bereich nach Art einer Sollbruchstelle brechen kann und der Gingivaformer vom Scanbody gelöst abgenommen werden kann.

Weiterhin kann der vorzugsweise rotationssymmetrische Bereich zwischen Gingivaformer und Scanbody so ausgebildet sein, dass dieser vorzugsweise rotationssymmetrische Bereich des Dentalbauteils vom Scanbody zum Gingivaformer in seiner radialen Wandstärke abnimmt.

In einer Weiterbildung des Dentalbauteils zur Verbindung mit einem Zahnimplantat kann der vorzugsweise rotationssymmetrische Bereich zwischen Gingivaformer und Scanbody Ausnehmungen oder Verdünnungen in der Wandung des vorzugsweise rotationssymmetrischen Bereiches aufweisen, die Sollbruchstellen für den vorzugsweise rotationssymmetrischen Bereich bereitstellen.

In einer Weiterbildung des Dentalbauteils zur Verbindung mit einem Zahnimplantat weist zumindest der Scanbody und, falls gewünscht auch der Gingivaformer, jeweils mindestens eine Orientierungsmarkierung auf, die zur Erfassung durch eine Scanvorrichtung ausgebildet ist.

Der Gingivaformer kann aus Metall, einem thermoplastischen Polymer oder einem Kompositmaterial von Metall und Kunststoff, das von einer Scanvorrichtung erfasst werden kann, bestehen.. In einer Ausführungsform des Dentalbauteils zur Verbindung mit einem Zahnimplantat kann zumindest der Gingivaformer aus einem Polymer, wie thermoplastischen Polymeren beispielsweise ausgewählt aus der Gruppe der thermoplastischen Polyester, Polyether, Polythioether, Polyarylalkylene, Polysilane, Polyamide, Polyolefine, Polyurethane oder Mischungen aus mindestens zwei Mitgliedern dieser Listevorzugsweise PEEK, bestehen.

In einer Ausführungsform des Dentalbauteils kann der Gingivaformer auch aus Polycaprolacton (PCL) bestehen. Für eine vorteilhafte physikalische und chemische Wechselwirkung zwischen dem Scanbody und einem dem anpassbaren Gingivaformer hat es sich als nützlich erwiesen, PCL-Material für einen anpassbaren Gingivaformer zu verwenden. Die PEEK-PCL-Kombination ist mechanisch stabil und es ist möglich, eine sehr feste Verbindung zwischen beiden Materialien herzustellen, die nur geringe Bewegungen zwischen den beiden Teilen während der Behandlung erlaubt. Vor allem letzteres führt zu einer sehr präzisen und stabilen geometrischen Beziehung zwischen beiden Teilen, die zur Erstellung hochpräziser digitaler Modelle in einem Scanverfahren verwendet werden kann. PCL ist ein Polymer mit den folgenden Wiederholungseinheiten: Neben dem PCL kann der individualisierbare Gingivaformer weitere Polymere oder zusätzliche Substanzen wie Füllstoffe, Pigmente, Rheologiemodifikatoren, pharmazeutische wirksame Agentien, antibakterielle Substanzen (z.B. antibakterielle Ionen), Stabilisatoren, etc. enthalten.

Vorzugsweise kann der Scanbody aus jedem mechanisch stabilen und biokompatiblen Material wie Metallen oder Kunststoffen hergestellt werden. Um jedoch sicherzustellen, dass der Scanbody abtastbar ist, und um darüber hinaus eine angemessene mechanische Kompatibilität mit dem anpassbaren Gingivaformer zu gewährleisten, kann zumindest ein Teil des Materials aus PEEK bestehen. Geeignete Mischpolymere mit Peek können aus der Gruppe der Polymere wie PEK, PEKK, PEKEKK usw. ausgewählt werden. Der Scanbody kann weitere Polymere enthalten, und es ist auch möglich, dass der Scanbody weitere Substanzen enthält, die allgemein im Bereich der polymeren Substrate verwendet werden. Zusätzliche Substanzen können Füllstoffe, Pigmente, Rheologiemodifikatoren, pharmazeutische wirksame Agentien, antibakterielle Substanzen (z.B. antibakterielle Ionen), Stabilisatoren und dergleichen sein.

In einer bevorzugten Ausführungsform des Dentalbauteils können sowohl der Gingivaformer als auch der Scanbody mindestens eine Orientierungsmarkierung, in der Regel durch die Positionierung des Scanbodies vorgegeben, aufweisen, die individuell angepasst ist, um von einer Scanvorrichtung erfasst zu werden. Neben der Eigenschaft, dass sowohl der Scanbody als auch der anpassbare Gingivaformer scanbar sind, hat es sich als zweckmäßig erwiesen, dass beide Bauteile auch Bereiche in oder an dem Dentalbauteil aufweisen, in denen das scanbare Verhalten anders ist als im Rest des Körpers. Dies bedeutet, dass der Scanbody einen oder mehrere definierte Bereiche umfassen kann, in denen sich das abtastbare Verhalten von dem des restlichen Scanbody unterscheidet. Dies kann durch die Integration bestimmter Bauteile erreicht werden, die eine andere Farbe, Zusammensetzung oder einen anderen Röntgenabsorptionskoeffizienten aufweisen. Darüber hinaus ist es auch möglich, dass der Orientierungsmarker ein fehlendes oder zusätzliches Teil des Scanbody ist, zum Beispiel ein Hohlraum, eine Öffnung oder Kerbe oder ein Aufsatz oder eine Verlängerung. Das Ersatz- oder Zusatzteil ist in der Lage, die 3D-Ausrichtung und die Höhe des Scanbodies sichtbar zu machen. Der gleiche Orientierungsmarker kann am oder im anpassbaren Gingivaformer vorhanden sein, wobei beide Teile nicht unbedingt die gleiche Art von Orientierungsmarker aufweisen müssen. Die Orientierungsmarkierung kann helfen, die Ausrichtung der gesamten Vorrichtung in Bezug auf die Mundhöhle oder in Bezug auf die benachbarten Zähne zu definieren. Darüber hinaus ist die Markierung auch hilfreich, um die Ausrichtung des anpassbaren Gingivaformers in Bezug auf den Scanbody (oder umgekehrt) zu definieren.

In einem weiteren bevorzugten Aspekt des Dentalbauteils kann die Position des Dentalbauteils mit Röntgenstrahlen abtastbar sein. Um auch die Fähigkeit zu integrieren, hochauflösende Röntgenprofile von dem Dentalbauteil zu erhalten, hat es sich als nützlich erwiesen, dass der Scanbody und der Gingivaformer röntgenstrahlabtastbare Orientierungsmarker umfassen. Dies kann die Gesamtzahl der verschiedenen Scanvorgänge reduzieren und ermöglicht es, denselben hochauflösenden Maßstab für beide Teile mit Standard-Zahnarztausrüstung zu erstellen.

Die Erfindung ist ebenso auf ein Verfahren zur Herstellung eines patientenspezifischen digitalen Zahnmodells gerichtet, das mindestens die folgenden Schritte umfasst:
a) Bereitstellen eines Dentalbauteils wie zuvor beschrieben;
b) Einsetzen und Fixieren eines Scanbodies in ein Implantat;
c) Scannen der Position des Scanbodies am Implantat;
d) Entnehmen des Scanbodies aus dem Implantat;
e) Einsetzen eines Dentalbauteils wie zuvor beschrieben in das Implantat und Fixieren des Dentalbauteils am Implantat;
f) Scannen der Position des Dentalbauteils am Implantat;
g) Abtrennen des Scanbodies des Dentalbauteils;
h) Erstellen eines patientenspezifischen digitalen Zahnersatzes auf der Grundlage der in den Schritt c) und f) erhaltenen Scandaten.

Überraschenderweise hat sich herausgestellt, dass das oben beschriebene Verfahren zu einem sehr präzisen und natürlichen digitalen Modell führt, das auf die in-vivo-Situation besser angepasst ist. Auf der Grundlage des digitalen Modells können weitere Behandlungsoptionen evaluiert und weitere Teile hergestellt werden, so dass ein Zahnersatz mit einer höheren Qualität im Vergleich zu Standardroutinen bereitgestellt werden kann.

Das individualisierte digitale Zahnmodell umfasst mindestens den Scanbody und den individualisierten Gingivaformer und optional Teile oder die komplette Umgebung der Zahnumgebung. Basierend auf den Daten können weitere Teile wie Kronen, Brücken, Inlays, Onlays, Veneers oder Dentalimplantate hergestellt werden, die zusammen mit dem Dentalbauteil verwendet werden können. Das Modell kann ein echter Gips, Alginat oder Gips oder ein digitales Modell sein. Auf der Grundlage der Modelldaten ist es beispielsweise möglich, die weiteren zahntechnischen Teile in einem additiven Fertigungsverfahren herzustellen.

Für das erfindungsgemäße Verfahren wird das Scannen in den Schritten c) und f) vorzugsweise mit einem optischen intraoralen Scanner durchgeführt wird.

Mit Hilfe des erfindungsgemäßen Verfahrens kann ein patientenspezifisches digitales Zahnmodell bereitgestellt werden, das zur Herstellung eines individuellen Zahnersatzmodells verwendet werden kann.

In Verfahrensschritt a) wird eine erfindungsgemäße Dentalvorrichtung bereitgestellt, wobei dieser Teil zumindest den Scanbody und den individualisierbaren Gingivaformer umfasst. In Verfahrensschritt b) wird ein erster Scanbody in das Implanatat eingesetzt und dort verdrehsicher festgelegt. In Schritt c) wird ein erster Scan mit einem Intraoral-Scanner durchgeführt und die Position der ersten Scanbodies gescant und digital gespeichert. Nach dem Entnehmen des Scanbodies aus dem Implantat und nach dem Einsetzen eines erfindungsgemäßen Dentalbauteils in das Implantat und Fixieren des Dentalbauteils am Implantat wird die Position des Dentalbauteils am Implantat gescant und die Daten digital gespeichert. Im nächsten Verfahrenschritt wird der Scanbody des Dentalbauteils abgetrennt und der Gingivaformer verbleibt in der Kavität des Implantats. Mit Hilfe der Scandaten der beiden Scans kann nun während der Heilung der Implantatwunde ein patientenspezifisches digitales Zahnmodell auf der Grundlage der in den Schritt c) und f) erhaltenen Scandaten erstellt werden.

In einer Ausführungsform des Verfahrens wird das Scannen der in den Schritt c) und f) erhaltenen Scandaten mit einem optischen intraoralen Scanner durchgeführt. Der intraorale Scanner hat sich als nützlich erwiesen, um den richtigen Detaillierungsgrad für die Erstellung eines geeigneten Modells einschließlich der natürlichen Gingivalinie des Patienten zu erhalten.

Darüber hinaus liegt es im Rahmen der Erfindung, die Verwendung des durch das erfindungsgemäße Verfahren erhaltenen digitalen Modells zur Herstellung eines individuellen Zahnersatzmodells auch mit einem individuellen Gingivaanteil zu offenbaren. Für die Vorteile der erfindungsgemäßen Verwendung wird ausdrücklich auf die Vorteile des erfindungsgemäßen Verfahrens und die Vorteile der erfindungsgemäßen Dentalvorrichtung hingewiesen.

Die vorliegende Erfindung wird unter Bezugnahme auf die folgenden Figuren näher erläutert, ohne die Intention, die Erfindung dadurch einzuschränken zu wollen.

Dabei zeigen:
Figur 1 einen Längsschnitt durch ein erfindungsgemäßes Dentalbauteil;
Figur 2 eine perspektivische Ansicht auf das Dentalbauteil aus Figur 1;
Figur 3 eine schematische Draufsicht auf das im Implantat festgelegte Dentalbauteil aus Figur 1;
Figuren 4A bis 4C mehrere Ausführungsformen unterschiedlicher Gingivaformer;
Figur 5 eine schematische Draufsicht auf einen im Zahnimplantat festgelegten Scanbody.

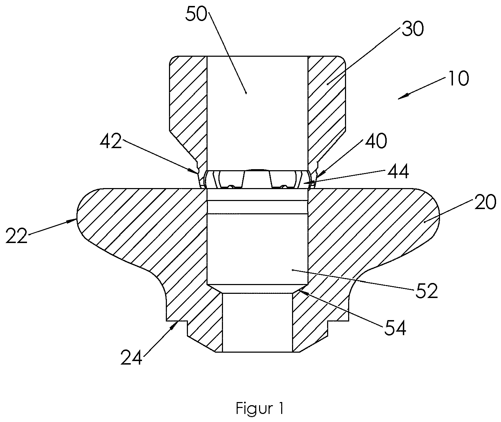

Wie in Figur 1 im schematischen Schnitt gezeigt, weist das erfindungsgemäße Dentalbauteil 10 den Gingivaformer 20 und den auf dem Gingivaformer 20 festgelegten Scanbody 30 auf, die über den Übergangsbereich 40 über Verbindungsstege 42 mit dazwischen angeordneten Ausnehmungen 44 verbunden sind. Durch das Dentalbauteil 10 ist durch den Scanbody 30 und den Gingivaformer 20 die Durchgangsbohrung 50 angeordnet, die im Scanbody 30 und im oberen Teil des Gingivaformers 20 einen größeren Durchmesser hat und im oberen Bereich des Gingivaformers 20 eine Aufnahme für den Schraubenkopf der in der Figur 1 nicht gezeigten Halteschraube zur Anlage am Konusabschnitt 54 aufweist. Der Gingivaformer 20 liegt mit dem umlaufenden Formabschnitt 22 an der Gingiva an und gibt die Außenform für den später einzusetzenden Zahnersatz vor. Das Dentalbauteil 10 liegt mit der Schulter 24 am Gingivaformer 20 auf dem in Figur 1 nicht gezeigten Implantat auf und ist in diesem über die in der Figur 1 nicht gezeigte Halteschraube am Implantat ... die in dem Übergangsbereich 40 gezeigten Verbindungsstege 42 sind in der in der Figur dargestellten Form kugelabschnittförmig ausgebildet sind derart beschaffen, dass sie in den Handhabung beim Einsatz des Dentalbauteils auf das Implantat ausreichende Festigkeit aufweisen, so dass während des Festlegens des Dentalbauteils und des Scanvorgangs unter Zuhilfenahme des Dentalbauteils 10 eine ausreichende Verbindungsstärke zwischen dem Gingivaformer 20 und dem Scanbody 30 bereitstellen.

Wenn nach Ende des Scanvorgangs lediglich der Gingivaformer 20 auf dem Implantat verbleiben soll, reicht in der in der Figur 1 dargestellten Ausführungsform eine leichte axiale Krafteinwirkung, beispielsweise durch Beaufschlagen mit einem Dentalwerkzeug aus, um die Verbindungsstege 42 brechen zu lassen und so eine Entfernung des Scanbodies 30 zu ermöglichen. Der Gingivaformer 20 des Dentalbauteils 10 verbleibt nach Entfernung des Scanbodies 30 in dem oberen Ende der Kavität des Implantats und sorgt für eine ungestörte Ausbildung der Gingiva um den Gingivaformer. Nach Fertigstellung des Zahnersatzes auf Basis des durch das erfindungsgemäße Verfahren gewonnenen digitalen Zahnmodels kann der Gingivaformer durch Lösen der Befestigungsschraube entfernt werden und der Zahnersatz kann perfekt in die durch den Gingivaformer gebildete Lücke eingesetzt werden.

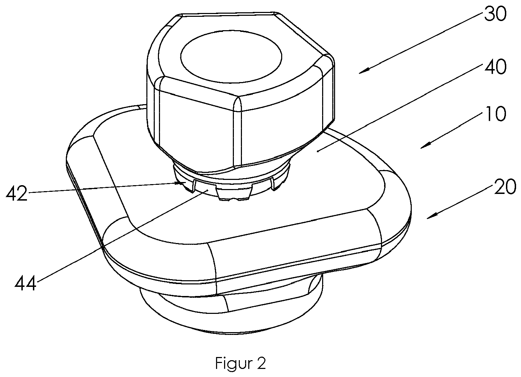

Figur 2 zeigt das erfindungsgemäße Dentalbauteil 10 in perspektivischer Draufsicht. Es sind Gingivaformer 20, Scanbody 30 sowie der Übergangsbereich 40 mit den Verbindungsstegen 42 und den Ausnehmungen 44 dargestellt.

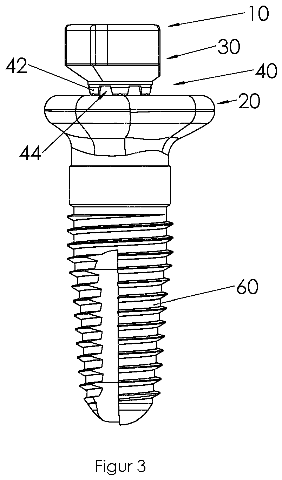

Figur 3 zeigt in Seitenansicht das in einem Implantat 60 angeordnete Dentalbauteil 10 mit Gingivaformer 20, Scanbody 30 und dem Übergangsbereich 40, indem die Verbindungsstege 42 und Ausnehmungen 44 dargestellt sind.

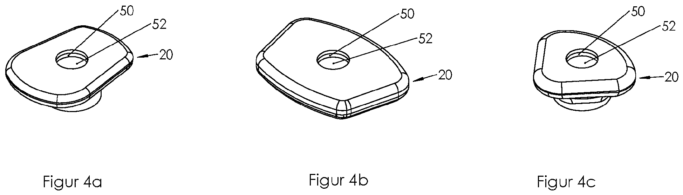

Figur 4 zeigt in den einzelnen Darstellungen einen Gingivaformer 20 des Dentalbauteils 10 in einer Ausführung für einen Schneidezahn (Figur 4A), für einen Backenzahn (Figur 4B) und einen Eckzahn (Figur 4C) jeweils in perspektivischer Draufsicht auf den Gingivaformer 20.

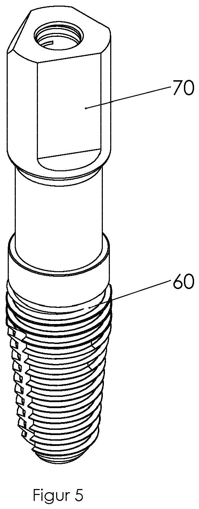

Figur 5 zeigt einen Scanbody 30, der auf einem Implantat festgelegt ist und der zum ersten Scan beim erfindungsgemäßen Verfahren zu verwenden ist.

### Liste der Referenzzahlen und -zeichen

- 10:: Dentalbauteil
- 20: Gingivaformer
- 22: Formabschnitt
- 24: Schulter
- 30: Scanbody
- 40: Übergangsbereich
- 42: Verbindungsstege
- 44: Ausnehmungen
- 50: Durchgangsbohrung
- 52: Aufnahme für den Schraubenkopf
- 54: Konusabschnitt
- 60: Implantat
- 70: Scanbody

## Patentansprüche

1. Dentalbauteil, das zur Verbindung mit einem Zahnimplantat ausgelegt ist, wobei das Dentalbauteil einen Gingivaformer und einen an dem Gingivaformer festgelegten Scanbody umfasst, wobei zumindest an dem Gingivaformer des Dentalbauteils Elemente vorhanden sind, die so ausgelegt sind, um mit korrespondierenden Elementen an dem Zahnimplantat, das in der Knochenstruktur eines Kiefers angeordnet ist, verbunden zu werden.

2. Dentalbauteil zur Verbindung mit einem Zahnimplantat nach Anspruch 1, wobei das Dentalbauteil einen Gingivaformer und einen an dem Gingivaformer festgelegten Scanbody umfasst, sowie eine axiale Durchgangsbohrung durch den Gingivaformer und den Scanbody aufweist, wobei das Dentalbauteil mittels einer Halteschraube, die einen Gewindeabschnitt und einen zylindrischen Schraubenkopf mit gegenüber dem Gewindeabschnitt vergrößertem Durchmesser aufweist, durch die Durchgangsbohrung an dem Zahnimplantat festlegbar ist

3. Dentalbauteil zur Verbindung mit einem Zahnimplantat nach Anspruch 2, wobei die Durchgangsbohrung im Scanbody einen zur Aufnahme des Schraubenkopfes der Halteschraube angepassten Durchmesser hat und so bemessen ist, dass die Halteschraube im Scanbody vorzugsweise versenkt und am Gingivaformer mit dem Schraubenkopf anliegend festlegbar ist.

4. Dentalbauteil zur Verbindung mit einem Zahnimplantat nach Anspruch 1, 2 oder 3, wobei Gingivaformer und Scanbody einstückig ausgebildet sind.

5. Dentalbauteil zur Verbindung mit einem Zahnimplantat nach Anspruch 4, wobei zwischen Gingivaformer und Scanbody ein vorzugsweise rotationssymmetrischer Übergangsbereich mit einer gegenüber Gingivaformer und Scanbody geringeren radialen Wandstärke ausgebildet ist.

6. Dentalbauteil zur Verbindung mit einem Zahnimplantat nach Anspruch 5, wobei der vorzugsweise rotationssymmetrische Bereich zylindrisch, konisch und/oder gebogen und vorzugsweise mit einer radialen Wandstärke von 10 µm bis 100 µm, ausgebildet ist.

7. Dentalbauteil zur Verbindung mit einem Zahnimplantat nach Anspruch 5 oder 6, wobei der vorzugsweise rotationssymmetrische Bereich zwischen Gingivaformer und Scanbody so ausgebildet ist, dass sich der Bereich vom Scanbody zum Gingivaformer verjüngt und/oder in seiner radialen Wandstärke abnimmt.

8. Dentalbauteil zur Verbindung mit einem Zahnimplantat nach Anspruch 5, 6 oder 7, wobei der vorzugsweise rotationssymmetrische Bereich zwischen Gingivaformer und Scanbody Ausnehmungen ausweist.

9. Dentalbauteil zur Verbindung mit einem Zahnimplantat nach einem der vorhergehenden Ansprüche, wobei zumindest der Scanbody und/oder der Gingivaformer mindestens eine Orientierungsmarkierung aufweist, die zur Erfassung durch eine Scanvorrichtung ausgebildet ist.

10. Dentalbauteil zur Verbindung mit einem Zahnimplantat nach einem der vorhergehenden Ansprüche, wobei zumindest der Gingivaformer aus einem Polymer, vorzugsweise PEEK, besteht.

11. Verfahren zur Herstellung eines patientenspezifischen digitalen Zahnmodells, das mindestens die folgenden Schritte umfasst:
a. Bereitstellen eines Dentalbauteils nach einem der vorhergehenden Ansprüche;
b. Einsetzen und Fixieren eines Scanbodies in ein Implantat;
c. Scannen der Position des Scanbodies am Implantat;
d. Entnehmen des Scanbodies aus dem Implantat;
e. Einsetzen eines Dentalbauteils nach einem der Ansprüche 1 bis 10 in das Implantat und Fixieren des Dentalbauteils am Implantat;
f. Scannen der Position des Dentalbauteils am Implantat;
g. Abtrennen des Scanbodies des Dentalbauteils;
h. Erstellen eines patientenspezifischen digitalen Zahnmodells mit einem patientenspezifischen Gingivaformers auf der Grundlage der in den Schritt c) und f) erhaltenen Scandaten.

12. Verfahren nach Anspruch 11, wobei das Scannen in den Schritten c) und f) mit einem optischen intraoralen Scanner durchgeführt wird.

13. Verwendung des digitalen Modells, das durch ein Verfahren nach einem der Ansprüche 11 oder 12 erhalten wurde, zur Herstellung eines individuellen Kronenmodells.
